Europäisches Patentamt

European Patent Office

Office européen des brevets

(11) Publication number: 0 464 276 A1

## EUROPEAN PATENT APPLICATION

(21) Application number: 90307226.2

(22) Date of filing: 02.07.90

(51) Int. Cl.⁵: G06F 15/72

(43) Date of publication of application:
08.01.92 Bulletin 92/02

(84) Designated Contracting States:
DE FR GB

(71) Applicant: International Business Machines Corporation
Old Orchard Road
Armonk, N.Y. 10504(US)

(72) Inventor: Phippen, Robert William
78 Greatbridge Street
Romsey, Hampshire SO51 8FG(GB)

(74) Representative: Burt, Roger James, Dr. et al
IBM United Kingdom Limited Intellectual
Property Department Hursley Park
Winchester Hampshire SO21 2JN(GB)

(54) Computer modelling system.

(57) A computer modelling system for gnomonic projection of a function defined at an object surface, the gnomonic projection being performed at a plurality of pierce points. The recomputation of the difference between two surface property projections as their relative orientation is altered is simplified thereby speeding up the process sufficiently to enable its use in an interactive system. A two dimensional map of the values of the field at the object surface is created. Thus the entire surface of the object is represented as a single entity. This map is then used as a look-up table in subsequent calculations of the gnomonic projections for arbitrary orientations of the pierce points with respect to a reference coordinate system. The computer modelling system finds particular application in the modelling and comparison of molecules.

FIG. 3a

EP 0 464 276 A1

The invention relates to a computer modelling system for making a gnomonic projection of a function defined at a surface. The invention finds particular, though not exclusive, application in the comparison of properties, such as the electrostatic field, at the surfaces of molecules.

The comparison, within a computer modelling system, of functions defined over surfaces of solid bodies of different shapes is a major problem. A useful technique for the comparison of surface properties is called gnomonic projection It involves the projection of a scalar surface property onto a spherical surface. The sphere nay be of arbitrary radius. The centre of the sphere defines a point of interest. A ray from the centre of the sphere meets the surface of the solid body at a pierce point; the value of the surface property at this point is then projected onto the sphere. If a gnomonic projection is performed for two different objects then the projections may be compared directly.

Such a technique has been described by Chau and Dean in J Mol Graphics 5(2), pp97-100, 1987. The prior art technique for surface comparison by gnomonic projection works as follows. A point-of-interest is chosen within the object for which the surface property is to be projected. A set of vectors, radiating from this point is defined which are distributed over the surface of a sphere. The point at which each vector pierces the outermost surface of the object is located, ie its coordinates are calculated. The value of the surface property at that point in three-dimensional space is then calculated ( eg by linear interpolation of the field stored as a three dimensional array of values) and that value is associated with the vector.

If two objects are to be compared this process is repeated for another object. The difference between the surface field for the two objects can then be calculated by direct subtraction of the values for each of the vectors.

A problem with this techniqine is that when the orientation of an object is altered, the points where the rays from the point of interest piece the surface are changed, and the entire process must be repeated. The cartesian coordinates of the pierce points of the gnomonic projection through the surface of the object have to be recalculated together with the value of the function at the pierce points. This complete recalculation makes the process very demanding on computing resources.

Therefore in accordance with the present invention there is provided a computer modelling system comprising means for representing a first object surface and means for gnomonic projection of a function defined at the first object surface, the gnomonic projection being performed at a plurality of pierce points on the object surface centred on a predetermined point of interest, the gnomonic projection means comprising: logic for determining values of the function at a plurality of points on the object surface; storage means for storing an array of determined values, indexed by angular coordinates of the points on the object surface in a first polar coordinate system having the origin at the point of interest; logic for determining the angular coordinates of the pierce points in a second polar coordinate system having the origin at the point of interest; logic for extracting values from the array corresponding to the angular coordinates of the pierce points to determine the function at the pierce points.

Therefore, for each object a two dimensional map of the values of the field at the chosen surface is created, similar to the two dimensional representation of height on a map of the world. Thus the entire surface of each object is represented as a single entity. This map is used as a look-up table when the gnomonic projection is carried out for an arbitrary orientation of the object with respect to a reference coordinate system.

The present invention provides an improvement to the prior art technique. The cartesian coordinates of the pierce points on the molecular surface do not have to be calculated explicitly to perform the gnomonic projection. The recomputation of the difference between surface property projections for two objects as their relative orientation is altered is thereby simplified and the process speeded up sufficiently to enable its use in an interactive system. The invention takes advantage of the fact that although the difference in the projections change as their relative orientation is altered, the individual projections remain unchanged.

Therefore in a preferred form of the invention the surface is fixed with respect to the second polar coordinate system and the computer modelling system comprises means for specifying the orientation of the second polar coordinate system with respect to the first polar coordinate system. The means for specifying the orientation of the second polar coordinate system can be a user input means, such as a set of dials.

The invention finds particular application in a computer modelling system where different objects are compared. Therefore the computer modelling system can further comprise means for representing a second object surface, means for gnomonic projection of a second object surface and means for comparing the gnomonic projection of the first object surface with the gnomonic projection of the second object surface. The comparing means can comprise logic for subtracting the function values at the pierce points for two surfaces to determine a difference function for the two surfaces and logic for combining the values of the difference function at the pierce points to determine an index of similarity for the two surfaces.

According to another aspect of the invention there is provided, in a computer modelling system comprising means for representing a first object surface, a method for gnomonic projection of a function defined at the first object surface, the gnomonic projection being performed at a plurality of pierce points on the object surface centred on a predetermined point of interest, the method comprising the steps of: determining values of the function at a plurality of points on the object surface; storing an array of determined values, indexed by angular coordinates of the points on the object surface in a first polar coordinate system having the origin at the point of interest; determining the angular coordinates of the pierce points in a second polar coordinate system having the origin at the point of interest; extracting values from the array corresponding to the angular coordinates of the pierce points to determine the function at the pierce points.

The invention is further described in the following description of a particular embodiment of the invention with reference to the following figures wherein;

Fig 1. is a diagram showing a data processing system according to the embodiment of the invention;

Fig 2 is a flow chart showing the logical steps of the method of the invention;

Figs 3a and 3b show different orientations of a molecule with respect to a reference coordinate system.

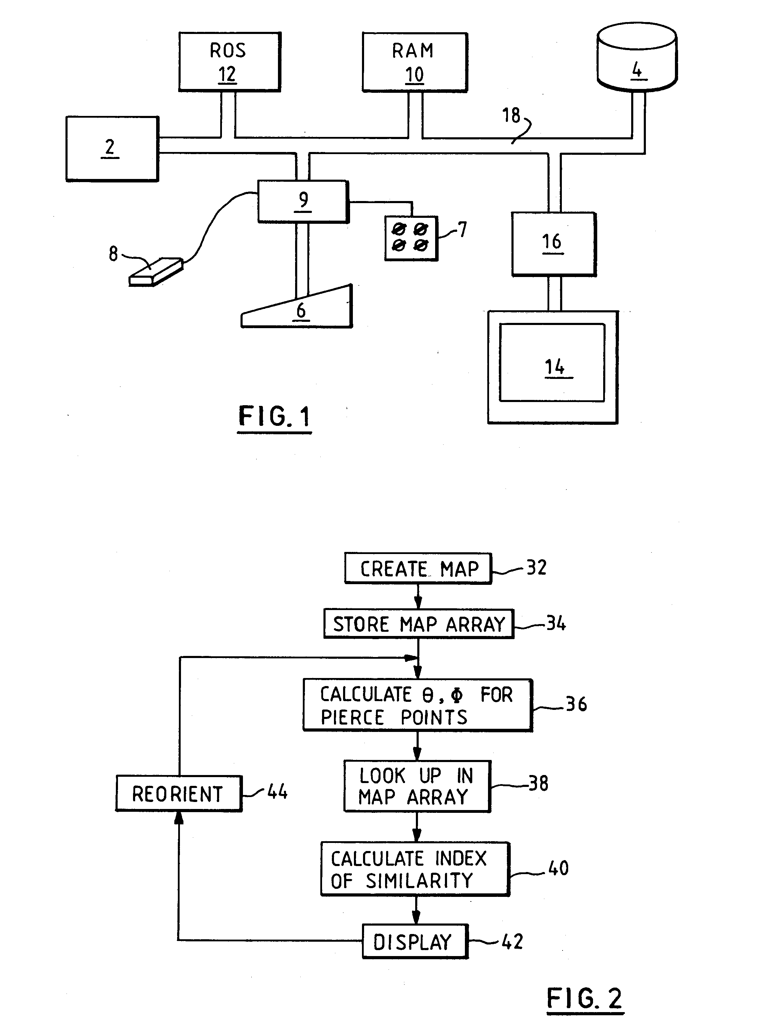

In the embodiment of the invention the computer modelling system is a graphics workstation and is shown in block diagram form in Fig. 1. It comprises a central processing unit 2, a disk storage device 4, user input devices such as a keyboard 6, set of dials 7 and a mouse 8 connected via a user interface adapter 9, random access memory 10, a read only store 12 and a display device 14 connected via a display adapter 16 to allow the data to be displayed. Data is transferred between the components of the data processor via a system bus 18.

The computer modelling system is for the display and comparison of molecules and properties defined on the surfaces of molecules, thus data regarding molecular structures and properties are stored in either the random access memory 10 or the disk storage device 4 and manipulated in the modelling system.

Within the computer modelling system a property defined at the surface of a molecule, such as the electrostatic field, is gnomonically projected. If this is performed for the same property for more than one molecule then the molecules, which may be of different shapes, may be compared. The difference between the property for the two molecules over the surface of the sphere may be displayed and the sum of the absolute differences over the surface of the sphere may be calculated and used to give an index of similarity between the molecules for that property.

In the embodiment of the invention the property is stored as a function $F(x,y,z)$ for each molecule, where $x$, $y$, and $z$ are cartesian coordinates for the three spatial directions, at a finite set of points $\{(x_i,y_i,z_i)\}$ distributed on a grid.

A point of interest is defined within the molecule for the gnomonic projection. This is chosen by a user using the keyboard 6.

According to the invention for each molecule the function $F$ is first projected onto the sphere for a set of points on the surface with a regular grid of values of $\Theta$ and $\Phi$, where $\Theta$ and $\Phi$ are the spherical polar coordinates of the point on the sphere in a spherical polar coordinate system centred on the point of interest. In this particular embodiment the set of points have $\Theta$ and $\Phi$ coordinates with constant increments although any regular distribution of points could be used. This projection of the function at the surface is thus represented as a set of values $\{F(\Theta_i,\Phi_j)\}$ where $\{\Theta_i\}$ and $\{\Phi_j\}$ represent the set of discrete values of $\Theta$ and $\Phi$. The values, $\{F(\Theta_i,\Phi_j)\}$, are stored in a 2-D array as a map of the surface.

The map of the molecular surface is used as a look-up table each time the gnomonic projection is calculated. The gnomonic projection is performed for a set of points which sample appropriately the surface of the sphere. It is impossible to generate an arbitrary number of precisely equally spaced points on a sphere. In this embodiment the sample points are distributed as a tessellation of triangles on each face of an icosahedral surface. The distance of each vertex from the centre of the icosahedron is normalised to be equal to the desired radius of the sphere. It should be noted that this is only one of many ways that a spherical surface may be approximated by a polyhedron.

The cartesian coordinates of the icosahedrally tessellated points normalised to lie on the surface of the sphere are calculated in a manner which is well known in the art. They are expressed in a reference coordinate system as $\{q\}$ where $q=(x,y,z)$, and $x^2+y^2+z^2=r^2$, r being the radius of the sphere. These vectors are fixed in the reference coordinate system.

The advantage of the present invention is that the cartesian coordinates of the pierce points on the molecular surface do not have to be calculated explicitly to perform the gnomonic projection.

The gnomonic projection is performed by calculating the values of $\Theta$ and $\Phi$ for each q. These are calculated using the following equations:

$\Theta = \arccos(z/R);$

$\sin\Phi = x/(R \sin\Theta);$

$\cos\Phi = y/(R \sin\Theta),$

where R is the radius of the sphere. The value of $\Phi$ can be calculated from $\sin\Phi$ and $\cos\Phi$.

The value of the function at the surface for particular values of $\Theta$ and $\Phi$ is then looked up in the 2-D array. The function value at an arbitrary point on the surface defined by $(\Theta, \Phi)$ is found by linear interpolation between the four values of the field at the nearest stored $\Theta_i$ and $\Phi_j$ map positions. The result of this process is a list of function values at the surface corresponding to the pierce points.

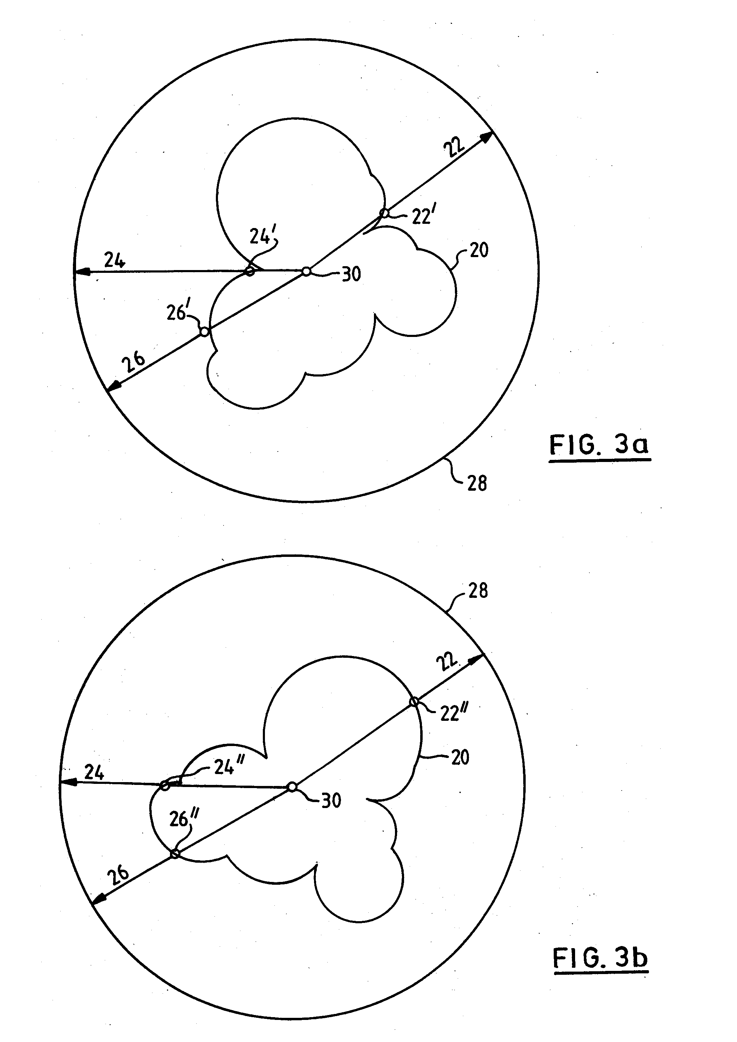

Fig 2 is a flow chart showing the logical steps involved in performing the gnomonic projection. A map is created 32 of the surface of the molecule and stored 34 in an array. The map contains values of the function for regularly spaced values of $\Theta$ and $\Phi$. Then for each pierce point, i.e. for each vector q, the values of $\Theta$ and $\Phi$ are calculated 36 and the corresponding function values looked up, 38, in the map array. If these steps are carried out for two molecules then an index of similarity may be calculated, 40, from the function values.

The projected values may then be displayed, 42, on a display device. This may be carried out in a number of ways but in this particular embodiment the projection is displayed on the display device as a coloured sphere with the different function values represented, as will be described below, by different colours.

The orientation of the molecule may be altered, 44, interactively using the set of dials 7. As the orientation of the molecule changes the information displayed on the display device is updated in real time i.e., steps 36 to 42 are repeated. If two molecules are simultaneously displayed then this allows the user to compare the molecule in a completely interactive way. If an index of similarity is displayed then the real time updating of the display gives a visual cue for the exploration of local minima in the index of similarity.

When the orientation of the surface is altered, 44, with respect to the reference coordinate system, the map, stored in the 2-D array, is still used to perform the gnomonic projection. When the surface is reoriented a particular q refers to a different point on the map. This is illustrated in figures 3a and 3b which show two orientations of a molecule 20 with respect to three of the q vectors 22, 24 and 26, which are fixed with respect to the reference coordinate system. In Fig 2a the pierce points are represented by the circles 22' 24' and 26'. In Fig 2b the new pierce points are represented by the circles 22'', 24'' and 26''. The gnomonic projection is made from the point of interest 30 onto the

sphere 28.

If the 3-dimensional rotation matrix describing the rotation of the molecule with respect to the reference coordinate system is $\Gamma$ then the $\Theta$ and $\Phi$ coordinates of the new pierce points can be calculated as follows. In a coordinate system fixed with respect to the molecular surface the vector q is transformed to $q' = (x',y',z')$ defined by $q' = \Gamma^{-1}q$. From the transformed cartesian coordinates the transformed angular coordinates, $(\Theta',\Phi')$, can be calculated as above. The value of the function at the pierce point corresponding to q' can be recalculated by looking up the function in the 2-D array at the four nearest stored $\Theta_i$ and $\Phi_j$ map positions to $\Theta'$ and $\Phi'$ and interpolating as before.

The process of recalculating the difference between the properties of two molecules involves the following steps: the transformed cartesian vectors q' are calculated for the first molecule; the spherical coordinates $\Theta'$ and $\Phi'$ are calculated for each q'; The value of the surface field at each vector q is calculated for the first molecule by linear interpolation; these steps are repeated for the second molecule which may have been reoriented by a different amount or whose orientation may be unchanged; the difference between the surface field for the two molecules is then recalculated by direct subtraction of the values for each q'; the sum of the absolute or mean-squared differences between the values at each of the points can then be calculated to give the index of similarity between the two surface properties.

The gnomonic projection of the function over the surface is presented in the display system of the present invention by using a coloured sphere, the different values of the function are represented by different colours on the surface of the sphere. This involves choosing an appropriate mapping from the scalar value in the data to the colour in the graphical representation.

To maximise the clarity of the display a value-colour mapping scheme is used which allows for the ability of the human eye to differentiate more finely between colours in the green-yellow range of the spectrum than it can between colours in the red-blue ranges of the spectrum. By mapping the greater proportion of the scalar values into the green-yellow area of the spectrum, an apparently linear scale of value versus colour is achieved. The mapping is adapted to emphasise the colour variation in sub-ranges of the scalar values which are of particular interest, and de-emphasise the colour variation in areas of less interest.

For a set of scalar values centred about zero, in the range $[-a,a]$, a parameter $c = a/2f$ is defined, where f controls the relative width of three value colour ranges, as follows;

[-fc, -(f-1)c]≡[red, yellow),
[-(f-1)c, (f-1)c]≡[yellow, cyan],
[(f-1)c, fc]≡[cyan, blue].

This value-colour mapping has been found to maximise the clarity of the display.

In this embodiment the gnomonic projection involves the projection of a surface onto a spherical surface. However a man skilled in the art will appreciate that a projection can be made in the same manner onto an ellipsoidal surface. The procedure is the same as for a spherical surface except that ellipsoidal polar coordinates are used instead of spherical polar coordinates. This is equivalent to performing length scale transformations in directions corresponding to the major axes of the ellipsoid. This extension of the invention is useful in situations where one length dimension of the molecule is much greater than the others, for example in the case of polymeric or chain molecules.

It should further be noted that although in the embodiment of the invention the gnomonic projections are of the surfaces of 3-D objects, a man skilled in the art will appreciate that the invention also applies to different dimensionalities. If a function defined at the surface of an n-dimensional object is to be gnomonically projected, a map of the surface may be stored in an (n-1)-dimensional array indexed by the angular coordinates of a polar coordinate system in n-dimensions.

There has been described a computer modelling system for gnomonic projection of a function defined at a surface, the gnomonic projection being performed at a plurality of pierce points. The invention is an improvement to the prior art technique, simplifying the recomputation of the difference between the two surface property projections as their relative orientation is altered thereby speeding up the process sufficiently to enable its use in an interactive system. According to the invention a two dimensional map of the values of the field at the chosen surface is created, similar to the two dimensional representation of height on a map of the world. Thus the entire surface of the object is represented as a single entity. This map is then used as a look-up table in subsequent calculations of the gnomonic projections for arbitrary orientations of the pierce points with respect to a reference coordinate system.

The invention finds particular application to the comparison of properties, such as the electrostatic field, at the surfaces of a molecule, but many other application are possible, for example the comparison of temperature distributions over the surfaces of a metal components.

## Claims

1. Computer modelling system comprising means for representing a first object surface and means for gnomonic projection of a function defined at the first object surface, the gnomonic projection being performed at a plurality of pierce points on the object surface centred on a predetermined point of interest, the gnomonic projection means comprising:
   logic for determining values of the function at a plurality of points on the object surface;
   storage means for storing an array of determined values, indexed by angular coordinates of the points on the object surface in a first polar coordinate system having the origin at the point of interest;
   logic for determining the angular coordinates of the pierce points in a second polar coordinate system having the origin at the point of interest;
   logic for extracting values from the array corresponding to the angular coordinates of the pierce points to determine the function at the pierce points.

2. Computer modelling system as claimed in claim 1 wherein the surface is fixed with respect to the second polar coordinate system and the computer modelling system comprises means for specifying the orientation of the second polar coordinate system with respect to the first polar coordinate system.

3. Computer modelling system as claimed in claim 2 wherein the means for specifying the orientation of the second polar coordinate system comprises a user input means.

4. Computer modelling system as claimed in any preceding claim comprising means for representing a second object surface and means for gnomonic projection of a second object surface and means for comparing the gnomonic projection of the first object surface with the gnomonic projection of the second object surface.

5. Computer modelling system as claimed in claim 4 wherein the comparing means comprises logic for subtracting the function values at the pierce points for two object surfaces to determine a difference function for the two object surfaces.

6. Computer modelling system as claimed in claim 5 wherein the comparing means comprises logic for combining the values of the difference function at the pierce points to determine an index of similarity for the two surfaces.

7. Computer modelling system as claimed in any preceding claim wherein the polar coordinates are spherical polar coordinates.

8. Computer modelling system as claimed in any preceding claim for modelling molecules.

9. Computer modelling system as claimed in claim 8 wherein the function is the electrostatic field.

10. Computer modelling system as claimed in any preceding claim comprising a display system for displaying the function as a coloured sphere with the function values represented by different colours on the surface of the sphere.

11. Computer modelling system as claimed in any preceding claim comprising a computer workstation including a display device.

12. In a computer modelling system comprising means for representing a first object surface, a method for gnomonic projection of a function defined at the first object surface, the gnomonic projection being performed at a plurality of pierce points on the object surface centred on a predetermined point of interest, the method comprising the steps of:

    determining values of the function at a plurality of points on the object surface;

    storing an array of determined values, indexed by angular coordinates of the points on the object surface in a first polar coordinate system having the origin at the point of interest;

    determining the angular coordinates of the pierce points in a second polar coordinate system having the origin at the point of interest;

    extracting values from the array corresponding to the angular coordinates of the pierce points to determine the function at the pierce points.

FIG. 1

FIG. 2

FIG. 3a

FIG. 3b

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 555 754 (SOCIETE INTER FORMATIQUE) <br> * Page 4, lines 17-26 * <br> – – – | 1 | G 06 F 15/72 |
| D,A | JOURNAL OF MOLECULAR GRAPHICS, vol. 5, no. 2, June 1987, pages 97-100; P.L. CHAU et al.: "Molecular recognition: 3D surface structure comparison by gnomonic projection" <br> * Page 99, first column, lines 14-53, second column, lines 1-10 * <br> – – – | 1 | |
| A | PROCEEDINGS CVPR, IEEE COMPUTER SOCIETY CONFERENCE ON COMPUTER VISION AND PATTERN RECOGNITION, Washington, DC, 19th - 23rd June 1983, pages 89-94; L. O'GORMAN et al.: "Image segmentation and nucleus classification for automated tissue section analysis" <br> * Page 91, first column, lines 1-26; figure 3 * <br> – – – | 1 | |
| A | FR-A-2 596 182 (INSTITUT GEOGRAPHIQUE NATIONAL) <br> * The whole document * <br> – – – – – | 1 | |

| TECHNICAL FIELDS SEARCHED (Int. Cl.5) |
|---|
| G 06 F 15/62 <br> G 06 F 15/72 <br> G 06 K 9/36 |

The present search report has been drawn up for all claims

| Place of search | Date of completion of search | Examiner |
|---|---|---|
| The Hague | 27 February 91 | PEREZ MOLINA E. |